# EUROPÄISCHE PATENTSCHRIFT

(11) **EP 1 124 893 B1**
(45) Veröffentlichungstag und Bekanntmachung des Hinweises auf die Patenterteilung: **22.12.2004**
(21) Anmeldenummer: 00942075.3
(22) Anmeldetag: 15.06.2000
(51) Int. Cl.: C08K 5/098, C08K 5/09, C08K 5/10, C08K 5/42

(54) **POLYISOCYANAT-POLYADDITIONSPRODUKTE**
POLYISOCYANATE POLYADDITION PRODUCTS
PRODUITS DE POLYADDITION DE POLYISOCYANATE

(30) Priorität: 23.06.1999 DE 19928676
(43) Veröffentlichungstag der Anmeldung: 22.08.2001
(73) Patentinhaber: BASF AKTIENGESELLSCHAFT, 67056 Ludwigshafen (DE)
(72) Erfinder: ARLT, Andreas, D-67273 Weisenheim am Berg (DE); CHAKRABARTI, Sarbananda, D-68169 Mannheim (DE); KREYENSCHMIDT, Martin, D-49393 Lohne (DE); RODEWALD, Dieter, D-49152 Bad-Essen (DE)
(86) Internationale Anmeldenummer: PCT/EP2000/005496
(87) Internationale Veröffentlichungsnummer: WO 2001/000721

(56) Entgegenhaltungen:
- DE-A- 3 443 341
- GB-A- 2 196 974
- US-A- 4 294 785

## Beschreibung

Die Erfindung bezieht sich auf Polyurethan weichschaumstoffe mit einer Dichte von 2 bis 70 Kg/m³ enthaltend hydrophobe Verbindungen sowie mindestens eine weitere Verbindung ausgewählt aus Gruppe: (i) organische, cyclische Verbindungen mit einem Molekulargewicht von 200 bis 3000 g/mol, (ii) Salze der Metalle der I, II und/oder VIII Nebengruppe, (iii) organische und/oder anorganische Säureanhydride, (iv) cyclische Sulfonsäureester und/oder Sulfone, (v) Lactone, Lactame und/oder cyclische Ester und/oder (vi) α,β-ungesättigte Carbonsäuren, α,β-ungesättigte Carbonsäurederivate, α,β-ungesättigte Ketone und/oder α,β-ungesättigte Aldehyde, bevorzugt ausgewählt aus der Gruppe: (i), (iii), (iv), (v) und/oder (vi), besonders bevorzugt ausgewählt aus der Gruppe: (iii), (iv) und/oder (vi). Des weiteren betrifft die Erfindung Verfahren zur Herstellung dieser Polyisocyanat-Polyadditionsprodukte, insbesondere Matratzen oder Polsterungen für Möbel und/oder Teppiche. Außerdem betrifft die Erfindung die Verwendung von hydrophoben Verbindungen zur Reduzierung der Bildung und/oder des Gehaltes von primären Aminen in Polyisocyanat-Polyadditionsprodukten und/oder zur Verringerung der Wasseraufnahme in Polyisocyanat-Polyadditionsprodukte, insbesondere Polyurethanweichschaumstoffe.

Die Herstellung von Polyisocyanat-Polyadditionsprodukten durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen, und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von primären aromatischen Aminen wie z.B. Toluylendiamin (TDA) und Diaminodiphenylmethan (MDA) oder primären aliphatischen Aminen wie beispielsweise Hexamethylendiamin oder Isophorondiamin.

Wie in Versuchen festgestellt wurde, wird die Aminbildung von einer Reihe von Parametern beeinflußt. Insbesondere hohe Temperaturen ab 80°C in Kombination mit hoher Luftfeuchtigkeit führen zur hydrolytischen Spaltung der Urethan- und Harnstoffbindungen. Derartige Bedingungen sind für einige spezielle Anwendungsgebiete von PUR-Weichschaumstoffen von Bedeutung.

Ein weiterer Parameter, der die Bildung primärer Amine signifikant beeinflußt, ist die Art und Menge der verwendeten Katalysatoren. Wie in diversen Experimenten nachgewiesen werden konnte, katalysieren die in Polyurethansystemen enthaltenen, für die Urethanisierungs- und Treibreaktion notwendigen Katalysatoren, in erheblichem Maße auch die hydrolytische Rückspaltungsreaktion. Die Anwesenheit von Katalysatoren ist somit eine ganz entscheidende Voraussetzung für die Hydrolyse der Urethan- und Harnstoffbindungen. Darüber hinaus konnte gezeigt werden, daß die Effizienz der Hydrolyse in hohem Maße von der Aktivität und der Art des Katalysators abhängig ist, sowie der Tatsache, ob der Katalysator im System verbleibt oder aus dem Material herausmigrieren kann. Insbesondere tertiäre Aminkatalysatoren mit reaktionsfähigen funktionellen Gruppen wie OH- und NH₂ beschleunigen die Aminbildung durch Absenkung der Aktivierungsenergie für die Spaltreaktion erheblich. Die funktionellen Gruppen bewirken den Einbau der Katalysatoren in das entstehende PUR-Netzwerk und die damit hergestellten Produkte weisen den Vorteil geringerer Geruchs- und Foggingproblematik auf, da die Katalysatoren nach der Fertigstellung des PUR-Produktes nicht durch Diffusion entweichen können. Dasselbe gilt für Rezepturen mit Polyolen, die mit primären oder sekundären Aminen als Startmoleküle hergestellt wurden und somit katalytisch aktive Zentren besitzen. Derartige Polyole kommen in jüngster Zeit vermehrt zum Einsatz. Bei Rezepturen mit solchen Bestandteilen, die als Spezialanwendungen besonderen feucht-warmen Bedingungen ausgesetzt sind, kann die Bildung von primären Aminen als Spaltprodukte nicht ausgeschlossen werden. Bei Schaumstoffen mit Aminkatalysatoren, die keine einbaufähigen funktionellen Gruppen enthalten, entweichen diese dagegen in der Regel bereits kurze Zeit nach der Fertigstellung, bzw. bei der Alterung des Schaumstoffes. Bei solchen Schaumstoffen führen feucht-warme Bedingungen zu wesentlich geringeren Amingehalten.

Als Verbindungen, die den Gehalt an aromatischen Aminen in Polyurethanweichschaumstoffen vermindern, werden gemäß US 4 211 847, GB 1 565 124 und DE-A 29 46 625 sterisch gehinderte cycloaliphatische Monoisocyanate und Monothioisocyante verwendet. Diese Isocyanate reagieren aufgrund ihrer sterischen Hinderung und der verglichen zu aromatischen Isocyanaten geringeren Reaktivität während der Schäumreaktion nur in geringem Umfang ab, so daß nach Beendigung der Schäumreaktion freies Isocyanat zur Reaktion mit gegebenenfalls vorhandenen aromatischen Aminen zur Verfügung steht. Nachteilig an diesen bekannten Lehren ist, daß die genannten Verbindungen relativ teuer und speziell die beiden zuletzt genannten Verbindungen trotz ihrer sterischen Hinderung zumindest teilweise auch an der Urethanisierungsreaktion beteiligt werden und nicht erst nach der Schäumreaktion mit gebildetem aromatischem Amin reagieren. Zudem neigen diese Isocyanate aufgrund ihres geringen Dampfdrucks dazu, aus dem fertigen Schaum herauszumigrieren und stellen somit eine weitere Gesundheitsgefahr durch Auftreten von freiem Isocyanat dar.

DE-A 42 32 420 offenbart die Verwendung von α,β-ungesättigten Estercarboxylaten zur Herstellung von Polyurethanschaumstoffen, die eine verbesserte Stauchhärte und Reißdehnung aufweisen. Salze von α,β-ungesättigten Estercarboxylaten werden hierin als Katalysatoren für die NCO/Wasser-Reaktion verwendet. In einem Nebensatz wird beschrieben, daß die Verbindungen aufgrund des Vorliegens von olefinischen Doppelbindungen in Nachbarschaft zu den Carboxylatgruppen zur Addition von Aminogruppen, die während der langsamen Schaumalterung entstehen, befähigt sind. Nachteilig an diesen Verbindungen ist ihre katalytische Wirkung, die zu einer Beeinträchtigung der Schäumreaktion führt. Die katalytische Wirkung von Additiven zur Reduzierung der Amingehalte in fertigen PUR-Schäumen ist jedoch nicht erwünscht, da dies wie oben beschrieben zu einer weiteren und beschleunigten Bildung primärer Amine führt.

Hydrolyseschutzmittel für Estergruppen enthaltende Polyurethane werden in DE-A 23 31 796, FR 1 550 562 und GB 1 014 974 beschrieben. Die Erhöhung der Hydrolysebeständigkeit der PUR-Produkte wird zumeist über eine Verbesserung der mechanischen Eigenschaften nach Feucht-Wärmelagerung begründet. DE-A 23 31 796 beschreibt den Zusatz von Epoxyverbindungen, um die Hydrolyse der Estergruppen in PUR-Produkten zu vermeiden. Für denselben Zweck werden in FR 1 550 562 Alkylcarbonate und in GB 1 014 974 Carbodiimide in Kombination mit einer enolgruppenhaltigen Verbindung beansprucht.

DD 238 992 beschreibt epoxidierte synthetische Produkte wie Triglyceride, Alkylepoxystearate etc. und epoxidierte Naturprodukte wie Sojaöl als Hydrolyseschutzmittel für Polyurethanelastomere. Die Verbesserung der Hydrolysebeständigkeit (erhöhte Härte, Zugfestigkeit und Bruchdehnung) beschränkt sich jedoch auf Polyurethanelastomere, die als Polyolkomponente Polyester enthalten. DD 298 246 beansprucht eine Polyolkomponente zur Herstellung von nichtzelligen Polyurethanformstoffen mit verbesserter Hydrolysebeständigkeit. Die Verbesserung der Hydrolysebeständigkeit wird hier durch den Zusatz von Fettaminen erzielt.

Ein ähnliches Reaktionsgemisch wird in der DE-A 3 443 341 beansprucht. Die Verbesserung der Bruchdehnung von gegebenenfalls zelligen Polyurethanen wird hier durch eine Mischung eines anorganischen Füllstoffes, einem Metallsalz einer Fettsäure und einem hydrophobierend wirkenden Mittel wie z.B einem Fettsäureamid, Fettalkohol oder auch einem natürlichen und synthetischen Wachs erzielt.

GB 2 313 128 offenbart Rizinusöl und Derivate sowie Polyole auf Basis von Polybutadien und gesättigten Kohlenwasserstoffen (> C₁₀) zur Erhöhung der Resistenz von Polyurethanen gegen eine Verfärbung. Auch hydrophobe Verbindungen ohne OH-Gruppen wie Olefine, Paraffine sowie Tier- und Pflanzenöle können verwendet werden.

US 5 549 841 beansprucht ein Verfahren zur Herstellung von PUR-Weichschaumstoffen mit verbessertem Druckverformungsrest für den Einsatz in tropischem bzw. subtropischem Klima. Diese Verbesserung wird durch die Verwendung von Polyolen mit variablem Ethylenoxid-Gehalt bzw. variablem Ethylenoxid-Endcap in Kombination mit Polymerpolyolen erreicht. Das Polymerpolyol enthält dabei eine Vinylpolymerdispersion in einem Polyoxyalkylengrundpolyol.

EP-A 672 698 beschreibt Verfahren zur Herstellung von Polyurethanen durch den Zusatz von Umsetzungsprodukten aus Polyalkylenpolyaminen und natürlichen Fetten bzw. Ölen. Die unter Verwendung dieser Produkte hergestellten Schaumstoffe sind weitgehend geschlossenzellig und weisen daher Hartschaumcharakter auf. Für Weichschaumanwendungen sind derartige Rezepturzusammensetzungen ungeeignet.

Ein weiteres Dokument, in dem hydrophobe PUR-Schaumstoffe beschrieben werden, ist die Schrift EP-A 933. Die unter Zusatz von Fettsäuren, Fettsäureestern, Addukten aus Fettsäuren und EO/PO sowie Fettsäureamiden hergestellten Schaumstoffe weisen ein hohes Adsorptionsvermögen gegenüber Öl und gegebenenfalls halogenhaltigen, hydrophoben Verbindungen auf.

WO 99/00428 offenbart Polyurethanweichschaumstoffe, die mit hydroxylierten Polydienen hergestellt werden.

Aufgabe der Erfindung war es Polyurethanweichschaumstoffe so zu modifizieren, daß die hydrolytische Spaltung von Urethan- und Harnstoffbindungen und damit insbesondere die Bildung aromatischer Amine verhindert oder zumindest vermindert wird. Die Verbindungen sollten möglichst kostengünstig und leicht verfügbar sein und ihre Wirkung im fertigen Schaum ohne weitere Nachbehandlung entfalten können. Zudem sollten sie die Schaumstoffeigenschaften möglichst wenig beeinflussen.

Diese Aufgabe konnte durch die eingangs beschriebenen Polyisocyanat-Polyadditionsprodukte bzw. die Verwendung der hydrophoben Verbindungen gelöst werden.

Es konnte festgestellt werden, daß das Ausmaß der hydrolytischen Rückspaltung von Urethan- und Harnstoffbindungen in erheblichem Maße von dem Eindringen an Feuchtigkeit in die Schaummatrix abhängig ist. Somit war es notwendig, Additive zu finden, die das Eindringen von Feuchtigkeit speziell bei solchen Schaumstoffen, die feucht-warmen Bedingungen ausgesetzt sind, behindern. Die Additive sollten dabei die Schäumreaktion und die Eigenschaften der Schaumstoffe nicht wesentlich beeinflussen.

Das Eindringen von Feuchtigkeit in die Schaumstoffmatrix ließ sich durch den Grad der Hydrophilie bzw. Hydrophobie der Schaumstoffe beeinflussen. Es wurde festgestellt, daß ein hydrophober Schaumstoff aufgrund seiner wasserabweisenden Eigenschaften weniger Feuchtigkeit aufnimmt als ein hydrophiler. Die beschriebene Problemstellung konnte dementsprechend dadurch gelöst werden, daß die Hydrophobie der Schaumstoffe erhöht wurde. Überraschend konnte festgestellt werden, daß durch diese erfindungsgemäße technische Lehre nicht nur das Eindringen von Wasser in insbesondere den Polyurethanweichschaumstoff verhindert werden konnte, sondern auch die Bildung von primären Aminen vermindert wurde.

Die erfindungsgemäßen hydrophoben Verbindungen werden bevorzugt bereits in den allgemein bekannten Verfahren zur Herstellung der Polyisocyanat-Polyadditionsprodukte, bevorzugt Polyurethane, die gegebenenfalls Isocyanurat und/oder Harnstoffstrukturen aufweisen können, besonders bevorzugt Polyurethanweichschaumstoffe, eingesetzt. Gegenstand der Erfindung sind somit auch Verfahren zur Herstellung von Polyurethanweichschaumstoffen mit den erfindungsgemäßen Parametern bezüglich der Wasseraufnahme und/oder Wasseradsorption durch Herstellung des Polyurethanweichschaumstoffes in Gegenwart der erfindungsgemäßen hydrophoben Verbindungen.

Die erfindungsgemäßen hydrophoben Verbindungen können bevorzugt gegenüber Isocyanaten reaktive Gruppen, bevorzugt 2 bis 4 reaktive Gruppen, insbesondere Hydroxylgruppen, aufweisen.

Bevorzugt sind hydrophobe Verbindungen mit einem Molekulargewicht von 500 bis 8000 g/mol, die mindestens ein zusammenhängendes, d.h. über Kohlenstoff-Kohlenstoff-Bindungen verbundenes Kohlenstoffgerüst mit mindestens 8, bevorzugt mindestens 10 Kohlenstoffatomen, aufweisen.

Bevorzugt werden demnach als hydrophobe Verbindungen Umsetzungsprodukte von Rizinusöl mit Alkylenoxiden, epoxidierte Fettsäureester, niedermolekulare hydroxyfunktionelle Polyolefine bevorzugt mit einem Molekulargewicht von 500 bis 8000 g/mol und/oder oleochemische Polyole auf Basis einer C₉-C₂₂-Fettsäure, hergestellt durch Ringöffnung von epoxidierten Triglyceriden, verwendet.

Insbesondere können folgende "hydrophobe Verbindungen" gegebenenfalls modifizierte, wobei unter dem Begriff modifiziert z.B. ringgeöffnete Fettsäureester zu verstehen sind, Fettsäureester, Öle, insbesondere pflanzliche Öle und/oder Polyolefine eingesetzt werden, beispielsweise:
Oleochemische Polyole, z.B. Triglyceride, auf Basis einer C₉-C₂₂-Fettsäure, beispielsweise hergestellt durch Ringöffnung von epoxidierten Fettsäureestern, beispielsweise Triglyceriden, bevorzugt mit einer Hydroxylzahl (OHZ) von 50 bis 300 mg KOH/g, wobei sich der Epoxygehalt je nach Vollständigkeit der Ringöffnung von 0 % bis 10 % variieren läßt;
Fettsäureester, bevorzugt epoxidierte Fettsäureester, bevorzugt mit einer Hydroxylzahl (OHZ) von 30 bis 500 mg KOH/g, besonders bevorzugt 100 bis 200 mg KOH/g, bevorzugt auf Basis einer C₉-C₂₂-Fettsäure, z.B. hergestellt durch Umesterung von oleochemischen Polyolen mit C₁-C₃₀-Alkanolen, z.B. Alkylepoxystearate, Alkylepoxytallate, Alkylepoxytetrahydrophthalate, Alkyloleate, Dialkyladipate, Dialkylsebacate, Phthalsäure-di-(methylcyclohexyl)-ester, Phthalsäure-dicyclohexylester, Phthalsäure-diisotridecylester, Phthalsäure-(hexyl-oleylcetyl)-ester, Phthalsäure-di-(oleylcetyl)-ester, Dioctyladipat, Adipinsäurediisodecylester, Dibutylsebacat, Dioctylsebacat, Isobutylstearat, Sojafettsäure-2-ethylhexylesterepoxid, Fettsäureisobutylester, Talgfettsäureisobutylester, Stearinsäure-2-ethylhexylester und/oder Ölsäure-tetrahydrofurfurylester;
Umsetzungsprodukte von natürlichen pflanzlichen Ölen, wie z.B. Rizinusöl, Leinöl und/oder Sojaöl mit Ethylen- und/oder Propylenoxid, vorzugsweise Propylenoxid, bevorzugt mit einer OHZ von 50 bis 200, besonders bevorzugt 80 bis 90 mg KOH/g und/oder
niedermolekulare Polyolefine, bevorzugt mit einem Molekulargewicht von 500 bis 8000 g/mol, die bevorzugt an beiden Enden hydroxyfunktionalisiert sind und/oder eine epoxidierte Isopreneinheit an einem oder beiden Enden besitzen.

Durch die Substitution eines Teils der Polyolkomponenten beispielsweise zur Herstellung der Polyurethanweichschaumstoffe durch die beschriebenen hydrophoben Verbindungen läßt sich die Hydrophobie der Schaumstoffe derart erhöhen, daß das Eindringen von Feuchtigkeit signifikant erschwert wird. Diese Erkenntnis ist speziell für Schaumstoffe, die feucht-warmen Bedingungen ausgesetzt sind (Heißdampfdesinfektion, bzw. zukünftig -sterilisierung von Krankenhausmatratzen, Heißdampfreinigung von Polstermöbeln und Teppichen), von außerordentlichem Vorteil. Bei Schaumstoffen, die mit solchen Polyolen hergestellt wurden, ist der Zutritt von Feuchtigkeit derart erschwert, daß das Auftreten einer hydrolytischen Spaltung von Urethan- und Harnstoffbindungen bei Feucht-wärmelagerung signifikant vermindert wird.

Die mit dieser Spaltreaktion verbundene Bildung von primären aromatischen Aminen wie Toluylendiamin oder Diaminodiphenylmethan wird dadurch ebenfalls deutlich vermindert. Die stabilisierende Wirkung der erfindungsgemäßen Polyole beruht vorteilhaft auf einer Verhinderung der Bildung primärer Amine, während durch den Zusatz von anderen Additiven, wie z.B. der oben genannten sterisch gehinderten Isocyanate, nur bereits gebildetes primäres Amin auf chemische Weise gebunden wird. Die erfindungsgemäßen hydrophoben Verbindungen sind gesundheitlich unbedenklich und können aufgrund ihrer guten Verträglichkeit mit den Bestandteilen der Polyolkomponente leicht in die Polyolkomponente eingearbeitet werden. Durch die erfindungsgemäßen hydrophoben Verbindungen wird sowohl einer Verschlechterung der mechanischen Eigenschaften insbesondere unter feucht-warmer Belastung als auch der Bildung von primären Aminen, insbesondere primären aromatischen Aminen, beispielsweise 2,2'-, 2,4', und/oder 4,4'-MDA und/oder 2,4- und/oder 2,6-TDA, entgegengewirkt.

Speziell die Verwendung von oleochemischen Polyolen ergibt offenzellige Schaumstoffe. Durch Variation des Anteils dieser Polyole läßt sich der Grad der Offenzelligkeit von PUR-Schaumstoffen gezielt einstellen.

Durch die Verwendung der erfindungsgemäßen hydrophoben Verbindungen lassen sich Schaumstoffe erhalten, die zu einem großen Anteil aus natürlichen, d.h. nachwachsenden Rohstoffen bestehen. Da die Herstellung von PUR-Formschaumstoffen und Blockschaumstoffen zunehmend unter ökologischen Gesichtspunkten betrachtet wird, sollten in Zukunft auch im Sinne einer Schonung der Ressourcen Fertigprodukte mit einem höheren Anteil an recycelbaren Komponenten hergestellt werden.

Zur Herstellung der Polyisocyanat-Polyadditionsprodukte werden die hydrophoben Verbindungen bevorzugt in einer Menge von 0,2 bis zu 100,0 Gew.-%, bezogen auf das Gewicht der insgesamt eingesetzten gegenüber Isocyanaten reaktiven Verbindungen, eingesetzt.

Bevorzugt können des weiteren zur Herstellung der Polyisocyanat-Polyadditionsprodukte (i) organische, cyclische Verbindungen mit einem Molekulargewicht von 200 bis 3000 g/mol, bevorzugt 200 bis 1300 g/mol, im Folgenden auch als "Makrocyclen" bezeichnet, eingesetzt werden.

Aufgrund des Einsatzes der Makrocyclen wird erreicht, daß die Makrocyclen mit tertiären Aminen, die als Katalysatoren bei der Herstellung der Polyisocyanat-Polyadditionsprodukte eingesetzt wurden, insbesondere im fertigen Polyisocyanat-Polyadditionsprodukt, Komplexe bilden und die tertiären Amine ihre katalytische Aktivität im Komplex mit den Makrocyclen nicht mehr entfalten können, d.h. blockiert sind. Da die komplexierten Aminkatalysatoren in den fertigen Polyisocyanat-Polyadditionsprodukten nicht mehr dazu befähigt sind, die eingangs geschilderte hydrolytische Rückspaltung von Urethan- und Harnstoffbindungen zu katalysieren, wird durch die Makrocyclen sowohl einer Verschlechterung der mechanischen Eigenschaften insbesondere unter feucht-warmer Belastung als auch der Bildung von primären Aminen, insbesondere primären aromatischen Aminen, beispielsweise 2,2'-, 2,4', und/oder 4,4'-MDA und/oder 2,4- und/oder 2,6-TDA entgegengewirkt. Des weiteren können die erfindungsgemäßen Makrocyclen durch Komplexierung mit primären Aminen, beispielsweise primären aromatischen Aminen diese an einer Migration oder Extraktion aus dem Polyisocyanat-Polyadditionsprodukt hindern. Auch die aminischen Katalysatoren werden durch eine derartige Komplexierung an einer Migration oder Extraktion aus dem Produkt gehindert. Die dadurch verringerte Geruchs- und Foggingproblematik wird insbesondere dadurch verstärkt, daß die erfindungsgemäßen Additive bevorzugt durch das Vorhandensein von OH-Gruppen zumindest teilweise in das Polyurethannetzwerk eingebaut werden können. Die somit fixierten Makrocyclen führen durch Einschluß von primären, und/oder tertiären Aminen zu deren Immobilisierung in der Schaummatrix.

Makrocyclen, z.B. Cyclodextrine sind neben Aminen zum Einschluß von wassermolekülen befähigt, was das Auftreten von hydrolytischen Spaltreaktionen weiter vermindert und somit der Bildung von primären Aminen zusätzlich entgegenwirkt.

Als Makrocyclen können allgemein bekannte Verbindungen verwendet werden, beispielsweise Cyclodextrine, Resorcarene, Cyclophane und/oder Cyclocalixarene, wobei die genannten Verbindungen jeweils modifiziert vorliegen können.

Derartige Cyclodextrine, die gegebenenfalls verzweigtkettig aufgebaut sein können, werden z.B. genannt in US 5 063 251, Spalte 2, Zeilen 55 bis 63 und DE-A 1 96 14 441, Seite 2, Zeilen 46 bis 47. Geeignete Cyclocalixarene werden beschrieben in US 4 642 362, Spalte 2, Zeile 34 bis Spalte 7, Zeile 68.

Bevorzugt ist die Verwendung von α-Cyclodextrin, β-Cyclodextrin, γ-Cyclodextrin, Umsetzungsprodukten dieser Cyclodextrine mit Alkylenoxiden, 4-tert.-Butylcalix[4]aren, 4-tert.-Butylcalix[6]aren, 4-tert.-Butylcalix[8]aren, 4-Sulfocalix[4]aren, 4-Sulfocalix[6]aren, 4-Sulfocalix[8]aren, C-Methylcalix[4]resorcinaren, C-Undecylcalix[4]resorcinaren, Tetra-N-pentylcalix[4]resorcinaren und/oder [2.2]Paracyclophan, besonders bevorzugt β-Cyclodextrin, 4-tert.-Butylcalix[6]aren, 4-Sulfocalix[6]aren und/oder [2.2]Paracyclophan.

Die Makrocyclen können in der A- und/oder B-Komponente beziehungsweise in den Bestandteilen dieser Komponenten verwendet werden, bevorzugt in der Isocyanatkomponente, um eine Komplexierung der Aminkatalysatoren, die üblicherweise in der A-Komponente enthalten sind, vor der Fertigstellung des Polyurethanproduktes zu vermeiden. Sind die Makrocyclen weder in der A- noch in der B-Komponente löslich, werden sie in der pulverisierter Form in einer der beiden Komponenten dispergiert und anschließend verarbeitet.

Zur Herstellung der Polyisocyanat-Polyadditionsprodukte setzt man die Makrocyclen bevorzugt in einer Menge von 0,2 bis 5 Gew.-%, bezogen auf das Gewicht der gegenüber Isocyanaten reaktiven Verbindungen ein.

Bevorzugt werden des weiteren (ii) Salze der Metalle der I, II und/oder VIII Nebengruppe, im folgenden auch allgemein als "Metallsalze" bezeichnet, zur Herstellung der Polyisocyanat-Polyadditionsprodukte eingesetzt. Unter dem Begriff "Salze der Metalle" bzw. "Metallsalze" sind auch die Kationen der erfindungsgemäßen Metalle in komplexierter Form zu verstehen und damit Gegenstand der beanspruchten technischen Lehre.

Aufgrund des Einsatzes der Metallsalze wird erreicht, daß die Metallionen mit tertiären Aminen, die als Katalysatoren bei der Herstellung der Polyisocyanat-Polyadditionsprodukte verwendet werden, Komplexe bilden und die tertiären Amine ihre katalytische Aktivität im Komplex mit den Metallen nicht mehr entfalten können, d.h. blockiert sind. Da die komplexierten Aminkatalysatoren in den fertigen Polyisocyanat-Polyadditionsprodukten nicht mehr befähigt sind, die eingangs geschilderte hydrolytische Rückspaltung von Urethan- und Harnstoffbindungen zu katalysieren, wird durch die Metallsalze sowohl einer Verschlechterung der mechanischen Eigenschaften insbesondere unter feucht-warmer Belastung als auch der Bildung von primären Aminen, insbesondere primären aromatischen Aminen, beispielsweise 2,2`-, 2,4', und/oder 4,4'-MDA und/oder 2,4- und/oder 2,6-TDA entgegengewirkt. Des weiteren können die erfindungsgemäßen Metallsalze durch Komplexierung mit primären Aminen, beispielsweise primären aromatischen Aminen diese an einer Migration oder Extraktion aus dem Polyisocyanat-Polyadditionsprodukt hindern. Auch die aminischen Katalysatoren werden durch eine derartige Komplexierung an einer Migration oder Extraktion aus dem Produkt gehindert, was sich in einem verbesserten Foggingverhalten der Schaumstoffe äußert. Darüber hinaus können die Metallsalze als Oxidationskatalysatoren wirken und einen oxidativen Abbau gegebenenfalls gebildeter aromatischer Amine beschleunigen.

Als Metallsalze können allgemein bekannte Salze der Metalle, beispielsweise Salze von anorganischen und/oder organischen Säuren, z.B. Mineralsäuren, der dargestellten Nebengruppen verwendet werden, beispielsweise Salze der folgenden Metalle: Cu, Ni, Co, Fe, Zn, Ag, Pd, und Rh, bevorzugt Cu-, Ni- und/oder Fe-Salze, wobei die Metalle jegliche stabile Oxidationsstufe aufweisen können.

Als Anion in den Metallsalzen können allgemein übliche Anionen vorliegen, beispielsweise Chlorid, Sulfat, Nitrat und/oder Carboxylate mit 1 bis 20 Kohlenstoffatomen. Des weiteren kommen Salze komplexierter Kationen derselben Metalle mit bekannten Liganden wie z.B. Monoalkylamine, Alkylendiamine, Phenantrolin, Acetylaceton, aromatische Phosphane wie Triphenylphosphan, aliphatische Phosphane wie Tributylphosphan, Salicylaldehyd und/oder 1,4-Diazabutadienderivate zum Einsatz, wobei bevorzugt keine tertiären Amine als Liganden verwendet werden. Beispielsweise kommen als Metallsalze bzw. derer komplexierter Kationen folgende Verbindungen in Frage: Cu(II)-sulfat, Cu(II)-chlorid, Ni(II)-sulfat, Co(II)-chlorid, Cu(II)-naphtenat, Fe(II)-chlorid, Cu(I)-chlorid, Fe(III)-chlorid, Cu(II)-acetat-Ethylendiaminkomplex, Fe(II)-Phenantrolinkomplex (unter dem Begriff Ferroin allgemein als Redoxindikator bekannt), Cu(I)-nitratobistriphenylphosphankomplex, [Glyoxal-bis(cyclohexylimin)]chloro-Kupfer(I)-komplex.

Zentralatom und Ligand des Metall-Ligand-Komplexes sind bevorzugt so zu wählen, daß das Zentralatom des Komplexes mit primären aromatischen Aminen bzw. tertiären aliphatischen Aminen Komplexe bilden bzw. deren Oxidation katalysieren kann. Bevorzugt ist der Komplex zwischen MDA und/oder TDA bzw. den aminischen Katalysatoren und dem Metallkation der eingesetzten Komplexe stabiler, d.h. die Dissoziationkonstante größer, als dies für das eingesetzte Komplexkation der Fall ist.

Bevorzugt werden Cu(II)-sulfat, Ni(II)-sulfat, Cu(II)-acetat, Fe(II)-Phenantrolinkomplex, Cu(II)-Acetat-Ethylendiaminkomplex, Cu(II)-naphtenat und/oder Cu(I)-nitratobistriphenylphosphankomplex als Metallsalz verwendet.

Zur Herstellung der Polyisocyanat-Polyadditionsprodukte werden die Metallsalze bevorzugt in einer Menge von 0,05 bis 5 Gew.-%, bezogen auf das Gewicht der Summe aus den Metallsalzen und den gegenüber Isocyanaten reaktiven Verbindungen eingesetzt.

Die Metallsalze können in der A- und/oder B-Komponente beziehungsweise in den Bestandteilen dieser Komponenten verwendet werden, bevorzugt in der Isocyanatkomponente.

Außerdem können bevorzugt (iii) organische und/oder anorganische Säureanhydride, besonders bevorzugt mindestens ein Carbonsäureanhydrid, zur Herstellung der Polyisocyanat-Polyadditionsprodukte eingesetzt werden, wobei das oder die Säureanhydrid(e) bevorzugt in einer Menge von 0,01 bis 20 Gew.-%, bezogen auf das Gewicht der Isocyanate und der Säureanhydride, verwendet werden.

Aufgrund der Säureanhydride erreicht man, daß die Anhydride in den Polyisocyanat-Polyadditionsprodukten insbesondere unter feuchten und warmen Bedingungen zu den Säuren hydrolysiert werden. Diese nach der Hydrolyse entstandenen Säuren blockieren die gegebenenfalls in den Produkten enthaltenen aminischen Katalysatoren beispielsweise durch Protonierung oder Reaktion und verhindern somit eine Beschleunigung der Rückspaltung der Urethanbindungen. Zudem werden durch eine unerwünschte Spaltung von Urethanbindungen gegebenenfalls entstandene freie Aminogruppen durch Reaktion mit den erfindungsgemäßen Säureanhydriden gebunden.

Die Säureanhydride werden somit in Polyisocyanat-Polyadditionsprodukten zur Stabilisierung der Polyisocyanat-Polyadditionsprodukte, insbesondere Polyurethane, gegen eine Spaltung der Urethan-und Harnstoffbindungen verwendet, beispielsweise durch Blockierung von aminischen Katalysatoren durch Protonierung der Katalysatoren oder durch Reaktion mit den Katalysatoren. Zudem können die Säureanhydride in Polyisocyanat-Polyadditionsprodukten zur Reaktion mit Aminogruppen, beispielsweise zu Amiden, in den Polyisocyanat-Polyadditionsprodukten Verwendung finden.

Die Diffusion von Aminen aus den Polyisocyanat-Polyadditionsprodukten und die Rückspaltung der Urethanbindung beispielsweise durch in den Polyisocyanat-Polyadditionsprodukten vorhandene aminische Katalysatoren kann damit vermindert kann.

Es wurde überraschenderweise gefunden, daß Säureanhydride, die bei der Herstellung von Polyisocyanat-Polyadditionsprodukten eingesetzt werden, den Herstellprozeß nahezu unbeschadet überstehen und nicht wesentlich in die Reaktion eingreifen. Dies gilt insbesondere, wenn man die Säureanhydride in Mischung mit Isocyanaten einsetzt, da diese Komponente üblicherweise frei von Wasser ist und somit eine Hydrolyse der Anhydride vermieden werden kann. Ein Einsatz der Säureanhydride in Mischung mit gegenüber Isocyanaten reaktiven Verbindungen kann besonders bevorzugt derart erfolgen, daß die Säureanhydride erst kurz vor der Herstellung der Polyisocyanat-Polyadditionsprodukte in diese Mischung gegeben werden, da die gegenüber Isocyanaten reaktiven Verbindungen üblicherweise geringe Anteile an Wasser enthalten, wobei auch die erfindungsgemäßen Säureanhydride über einen längeren Zeitraum in den gegenüber Isocyanaten reaktiven Verbindungen stabil sein können.

Überraschend konnte festgestellt werden, daß die Säureanhydride in Mischung mit Isocyanaten bei Raumtemperatur, d.h. 25°C, stabil sind und die Isocyanatgruppen nicht oder nicht wesentlich mit den Anhydridgruppen reagieren.

Als Anhydride können organische oder anorganische Säureanhydride, beispielsweise auch Polyanhydride, eingesetzt werden, bevorzugt Carbonsäureanhydride, beispielsweise Anhydride aliphatischer, cycloaliphatischer, araliphatischer und/oder aromatischer Carbonsäuren mit üblicherweise 1 bis 10, bevorzugt 1 bis 2, Carboxylgruppen, wobei auch gemischte Anhydride hergestellt auf der Basis von mindestens zwei verschiedenen Carbonsäuren eingesetzt werden können. Als Anhydride können auch Polyanhydride eingesetzt werden, die durch Di- und/oder Polycarbonsäuren erhältlich sind bzw. Copolymere aus Anhydriden und unterschiedlichsten Alkenen. Bevorzugt sind die Carboxylgruppen der Verbindungen weitgehend, besonders bevorzugt vollständig in die entsprechenden Anhydride überführt. Die Verbindungen (ii) weisen üblicherweise ein Molekulargewicht von 60 bis 1000000 g/mol auf. Beispielhaft seien genannt: Essigsäureanhydrid, Propionsäureanhydrid, Buttersäureanhydrid, Pentansäureanhydrid, Hexansäureanhydrid, Heptansäureanhydrid, Oktansäureanhydrid, Dimethylolpropionsäureanhydrid, Adipinsäureanhydrid, Fumarsäureanhydrid, Mesaconsäureanhydrid, Methylenmalonsäurenahydrid, Trimellithsäureanhydrid, 4,4'-Ethylenglykol-bis-anhydrotrimellithat, 4,4`-(2-Acetyl-1,3-glycerin)bis-anhydrotrimellithat, Decandionsäureanhydrid, Dodecandionsäureanhydrid, Azelainsäureanhydrid, Pimelinsäureanhydrid, Brassylsäureanhydrid, Citraconsäureanhydrid, Itaconsäureanhydrid, Naphthalin-1,8-dicarbonsäureanhydrid, Naphthalin-1,2-dicarbonsäureanhydrid, Chlorendicsäureanhydrid, 1,2,3,6-Tetrahydrophthalsäureanhydrid, Mellophansäureanhydrid, Benzol-1,2,3,4-tetracarbonsäureanhydrid, Benzol-1,2,3-tricarbonsäureanhydrid, Benzoesäureanhydrid, Diphenyl-3,3'-4,4'-tetracarbonsäureanhydrid, Diphenyl-2,2'-3,3'-tetracarbonsäureanhydrid, Naphthalin-2,3,6,7-tetracarbonsäureanhydrid, Naphthalin-1,2,4,5-tetracarbonsäureanhydrid, Naphthalin-1,4,5,8-tetracarbonsäureanhydrid, Decahydronaphthalin-1, 4, 5, 8-tetracarbonsäureanhydrid, 4, 8-Dimethyl-1,2,3,5,6,7-hexahydronaphthalin-1,2,5,6-tetracarbonsäureanhydrid, 2,6-Dichloronaphthalin-1,4,5,8-tetracarbonsäureanhydrid, 2,7-Dichloronaphthalin-1,4,5,8-tetracarbonsäureanhydrid, 2,3,6,7-Tetrachloronaphthalin-1,4,5,8-tetracarbonsäureanhydrid, Phenanthren-1,3,9,10-tetracarbonsäureanhydrid, Perylen-3,4,9,10-Tetracarbonsäureanhydrid, Bis(2,3-dicarboxyphenyl)methananhydrid, Bis (3,4-dicarboxyphenyl)-methananhydrid, 1,1-Bis(2,3-dicarboxyphenyl)ethananhydrid, 1,1-Bis(3,4-dicarboxyphenyl)ethananhydrid, 2,2-Bis(2,3-dicarboxyphenyl)propananhydrid, 2,2-Bis(3,4-dicarboxyphenyl)propananhydrid, Bis(3,4-dicarboxyphenyl)sulfonanhydrid, Bis (3,4-dicarboxyphenyl)etheranhydrid, Ethylentetracarbonsäureanhydrid, Butan-1,2.3.4-tetracarbonsäureanhydrid, Cyclopentan-1,2,3.4-tetracarbonsäureanhydrid, Pyrrolidin-2,3,4,5-tetracarbonsäureanhydrid, Pyrazin-2,3.5,6-tetracarbonsäureanhydrid, Mellithsäureanhydrid, Thiophen-2,3,4,5-tetracarbonsäureanhydrid, Benzophenon-3,3',4,4'-tetracarbonsäureanhydrid, Maleinsäureanhydrid, Glutarsäureanhydrid, Pyromellitsäureanhydrid, Phthalsäureanhydrid, Isophthalsäure- und/oder Terephthalsäureanhydrid, Benzoesäureanhydrid, Phenylessigsäureanhydrid, Cyclohexylalkansäureanhydride, Malonsäureanhydrid, Bernsteinsäureanhydrid, Poly-maleinsäureanhydrid, Anhydride auf der Basis von Addukten der Maleinsäure mit Styrol, Dodecenylbernsteinsäureanhydrid, Anhydride aus Maleinsäure und beliebigen Alkylenen, wie n-Octylen-Bernsteinsäureanhydrid, n-Dodicylen-bernsteinsäureanhydrid und/oder Copolymere aus Anhydriden und beliebigen weiteren Monomeren, wie Isobuten und Maleinsäureanhydrid, Poly-(ethylen-co-acrylsäurebutylester comaleinsäuredianhydrid) und/oder Poly-(styrol-co-maleinsäureanhydrid), wobei die entsprechenden Di- oder Polysäuren teilweise oder bevorzugt vollständig als Anhydride vorliegen. Die entsprechenden Anhydride können bei den Di- oder Polysäuren, soweit dies sterisch möglich ist, sowohl inter- als auch intramolekular ausgebildet sein.

Bevorzugt werden Anhydride auf der Basis folgender Verbindungen eingesetzt: Pyromellitsäure, Bernsteinsäure, Maleinsäure, Poly-maleinsäureanhydrid, Glutarsäure, die auch unterschiedlichste Seitengruppen enthalten können, und/oder Copolymeren dieser Anhydride mit allen denkbaren Monomeren, die mit Anhydriden bzw. Säuren polymerisierbar sind.

Besonders bevorzugt sind im allgemeinen solche Anhydride, die sich gut in den Isocyanaten und/oder den gegenüber Isocyanaten reaktiven Verbindungen, bevorzugt den Isocyanaten, lösen.

Des weiteren können (iv) cyclische Sulfonsäureester, auch als Sultone bezeichnet, und/oder Sulfone, d.h. Verbindungen enthaltend Sulfonylgruppen, bevorzugt ungesättigte Sulfone, eingesetzt werden. Die cyclischen Sulfonsäureester und Sulfone werden im folgenden auch allgemein als "Schwefelverbindungen" bezeichnet. Es wurde nun überraschenderweise gefunden, daß der Zusatz der Schwefelverbindungen zu deutlich reduzierten Gehalten an primären Aminen führt. Die Umsetzung von primären Aminen kann unter relativ milden Bedingungen erfolgen. Neben der Umsetzung von bereits gebildetem primären Amin zu unbedenklicheren Verbindungen bewirkt der Zusatz von Schwefelverbindungen insbesondere von Sultonen, daß die Bildung der primären Amine verhindert wird. Der Mechanismus, der dieser verminderten Aminbildung zu Grunde liegt, beruht auf der Deaktivierung der vorhandenen tertiären Aminkatalysatoren, die nach Fertigstellung des Polyurethanproduktes zu einer Katalyse der hydrolytischen Spaltung von Urethan- und Harnstoffbindungen und damit zur Bildung von primären Aminen beitragen.

Insbesondere die zugesetzten Sultone führen bei der Schäumreaktion durch die dabei entstehende Exothermie durch Hydrolyse zur Bildung der entsprechenden Sulfonsäuren. Diese Sulfonsäuren wiederum sind zur Reaktion mit tertiären Aminen befähigt, indem sie das katalytisch aktive Stickstoffatom protonieren. Damit wird nicht nur der Bildung von primären Aminen entgegengewirkt, sondern auch der damit einhergehenden Verschlechterung der mechanischen Eigenschaften bei der Alterung des Polyurethanproduktes. Als besonderer Vorteil der erfindungsgemäßen Additive wurde überraschenderweise sogar eine Verbesserung der mechanischen Eigenschaften vor der Alterung festgestellt. Ein weiterer positiver Effekt, der mit dieser Hydrolyse der Sultone einhergeht, ist die Tatsache, daß ein Großteil des eindringenden Wassers bereits für diese Reaktion verbraucht wird und für die Spaltung von Urethan- und Harnstoffbindungen nicht mehr zur Verfügung steht. Um eine vorzeitige Hydrolyse der Sultone bereits vor der Schäumreaktion zu verhindern, werden diese bevorzugt in der Isocyanatkomponente gelöst.

In ungesättigten Sulfonen bewirkt die Sulfonylgruppe infolge der positiven Partialladung am Schwefelatom eine so starke Polarisierung der C=C-Doppelbindung, daß diese unter sehr milden Bedingungen zur Addition von primären Aminen befähigt sind. Der Gehalt an primären Aminen in Polyisocyanat-Polyadditionsprodukten läßt sich durch den Zusatz von ungesättigten Sulfonen durch Umsetzung zu unbedenklichen Verbindungen deutlich reduzieren. Zudem führen auch Sulfone zu einer Verbesserung der mechanischen Eigenschaften der Polyisocyanat-Polyadditionsprodukte.

Durch den Zusatz von Sultonen und Sulfonen kann die Diffusion bzw. Migration von primären Aminen aus den Polyurethanprodukten vermindert werden. Sultone bewirken in hydrolysierter Form eine Verbesserung des Foggingverhaltens, indem die Diffusion von tertiären Aminkatalysatoren durch Umsetzung dieser mit den hydrolysierten Sultonen verhindert wird.

Bei bromierten Sultonen (z.B. Tetrabrom-2-Sulfobenzoesäureanhydrid) und Sulfonen wurde außerdem eine Erhöhung der Flammbeständigkeit der damit hergestellten Schaumstoffe festgestellt.

Demnach werden durch die Schwefelverbindungen sowohl einer Verschlechterung der mechanischen Eigenschaften insbesondere unter feucht-warmer Belastung als auch der Bildung von primären Aminen, insbesondere primären aromatischen Aminen, beispielsweise 2,2'-, 2,4', und/oder 4,4'-MDA und/oder 2,4- und/oder 2,6-TDA entgegengewirkt.

Besonders wirksam erwiesen sich die erfindungsgemäßen Additive bei PUR-Rezepturen, die als Katalysatoren tertiäre Amine mit reaktionsfähigen funktionellen Gruppen enthalten.

Als Schwefelverbindungen können allgemein bekannte Verbindungen eingesetzt werden, bevorzugt Sultone und/oder ungesättigte Sulfone.

Beispielsweise kommen in Betracht: cyclische Ester aliphatischer und aromatischer Sulfonsäuren, sog. Sultone, z.B. 1,3-Propansulton, 1,4-Butansulton, 2,4-Butansulton, 2,3-Benzopropansulton, Tolylsulton, 2-Sulfobenzoesäure-cyclo-anhydrid, Tetrabrom-2-sulfobenzoesäure-cyclo-anhydrid, Tetrajod-2-sulfobenzoesäure-cyclo-anhydrid, 1-Naphtol-8-sulfonsäuresulton, Carbylsulfat und/oder Triphenylmethanfarbstoffe mit Sultongruppierungen, z.B. Phenolrot, Pyrogallolrot, Pyrocatecholviolett, Thymolblau, Bromthymolblau, p-Xylenolblau, Bromxylenolblau, Bromcresolgrün, Bromphenolblau, Tetrabromphenolblau, Chlorphenolrot, Cresolrot, Xylenolorange, Bromphenolrot, Nitrophenol-sulfonphtalein, Sulfonfluorescein und/oder Brompyrogallolrot, bevorzugt 1,3-Propansulton, 1,4-Butansulton, 2,4-Butansulton, 2-Sulfobenzoesäure-cyclo-anhydrid, Tetrabrom-2-sulfobenzoesäure-cyclo-anhydrid und 1-Naphthol-8-sulfonsäuresulton.

Als ungesättigte Sulfone können z.B. Butadiensulfon, Divinylsulfon, Benzyl-allylsulfon, Allylsulfon, Thionaphthen-1,1-dioxid und/oder p-Tolylvinylsulfon, bevorzugt Butadiensulfon, eingesetzt werden.

Zur Herstellung der Polyisocyanat-Polyadditionsprodukte werden die Schwefelverbindungen bevorzugt in einer Menge von 0,01 bis 20 Gew.-%, bezogen auf das Gewicht des Polyisocyanat-Polyadditionsproduktes eingesetzt.

Des weiteren können (v) Lactone, Lactame und/oder cyclische Ester, im Folgenden auch als "Inhibitoren" bezeichnet, verwendet werden.

Der Zusatz der Inhibitoren in PUR-Schaumrezepturen führt überraschend zu deutlich reduzierten Gehalten an primären Aminen. Als erfindungsgemäße Inhibitoren zur Reduzierung des Gehaltes an primären Aminen in Polyurethanprodukten wurden demnach Lactone bzw. cyclische Ester und Lactame gefunden. Wie Versuche gezeigt haben, gibt es verschiedene Mechanismen, die zu dieser Reduzierung beitragen. Aus der Literatur ist die Hydrolyse von Lactonen unter Feuchtigkeitseinwirkung zu Hydroxycarbonsäuren bekannt. Die durch Hydrolyse der Inhibitoren entstehende Carbonsäure ist zur Protonierung des tertiären N-Atoms im Aminkatalysator befähigt. Durch die Blockierung des katalytisch aktiven N-Atoms unter Ausbildung eines quartären N-Atoms verliert der Aminkatalysator seine katalytische Aktivität bezüglich der hydrolytischen Rückspaltung von Urethan- und Harnstoffbindungen. Dadurch wird einer Verschlechterung der mechanischen Eigenschaften der Polyisocyanat-Polyadditionsprodukte, insbesondere der Weichschaumstoffe, insbesondere unter feucht-warmer Belastung, als auch der Bildung von primären Aminen, insbesondere primären aromatischen Aminen, beispielsweise 2,2'-, 2,4', und/oder 4,4'-MDA und/oder 2,4- und/oder 2,6-TDA, entgegengewirkt. Durch den Zusatz der Inhibitoren wird die Hydrolyse von Urethan- und Harnstoffbindungen auf zweierlei weise vermindert, wie erwähnt durch die Deaktivierung der vorhandenen Aminkatalysatoren aber auch dadurch, daß ein Großteil des eindringenden Wassers bereits für die Hydrolyse der zugesetzten Lactone und Lactame verbraucht wird und für die Spaltung von Urethan- und Harnstoffbindungen nicht mehr zur Verfügung steht. Zum anderen sind die Inhibitoren jedoch auch zur Reaktion mit bereits gebildetem primären Amin zu Hydroxy- bzw. Aminocarbonsäureamiden befähigt.

Durch den Zusatz der Inhibitoren kann die Diffusion bzw. Migration von primären Aminen aus den Polyurethanprodukten vermindert werden, indem die primären Amine zu Hydroxy- bzw. Aminocarbonsäureamiden umgesetzt werden. Durch das höhere Molekulargewicht der Umsetzungsprodukte, insbesondere bei der verwendung von Lactonen höhergliedriger Carbonsäuren, wie z.B. der Hydroxydecansäure oder der Hydroxydodecansäure, wird die Diffusion bzw. Migration aus der Polyurethanmatrix vermindert, so daß das Foggingverhalten verbessert wird.

Lactame und Lactone bewirken nach deren Hydrolyse außerdem eine Verbesserung des Foggingverhaltens von Polyurethanprodukten, indem die Diffusion der verwendeten tertiären Aminkatalysatoren durch deren Protonierung verhindert wird. Des weiteren ist bei Polyurethanschaumstoffen, insbesondere Polyurethanweichschaumstoffen, in einigen Anwendungen erwünscht, die Vernetzungsdichte durch Rezepturanpassung (Erhöhung des Vernetzeranteils, Verwendung von Mehrkern-MDI, Indexerhöhung) anzuheben, ohne dabei aber die Härte zu stark zu erhöhen. Durch den Zusatz von Lactonen und Lactamen, die auch als Weichmacher fungieren, ist es möglich, diese unerwünschte Härteerhöhung auszugleichen.

Als erfindungsgemäße Inhibitoren können beispielsweise die folgenden Verbindungen eingesetzt werden:
- Lactone, beispielsweise solche mit einem Molekulargewicht von 70 bis 300 g/mol, z.B. β-Propiolacton, γ-Butyrolacton, γ-Valerolacton, ε-Caprolacton, γ-Decanolacton, δ-Decanolacton, δ-Dodecanolacton, γγ-Dimethylbutyrolacton und/oder α-Ethyl-γ-Methylbutyrolacton.
- Lactame, beispielsweise solche mit einem Molekulargewicht von 70 bis 300 g/mol, z.B. β-Propiolactam, 2-Pyrrolidon, N-Methylpyrrolidon und 2-Piperidon.
- Cyclische Ester, beispielsweise solche mit einem Molekulargewicht von 150 bis 500 g/mol, bevorzugt Kondensationsprodukte von aliphatischen, cycloaliphatischen, araliphatischen und/oder aromatischen Dicarbonsäuren mit 4 bis 15 Kohlenstoffatomen und aliphatischen, cycloaliphatischen, araliphatischen und/oder aromatischen Dialkoholen mit 2 bis 15 Kohlenstoffatomen, besonders bevorzugt Kondensationsprodukte basierend auf Diethylenglykol (DEG) und Adipinsäure (ADS). Diese cyclischen Ester, wie z.B. der cyclische DEG-ADS-Ester und der cyclische ADS-DEG-ADS-DEG-Ester, befinden sich neben DEG und niedermolekularen linearen Estern zu ca. 40 bis 50 Massen-% in einem Destillationsrückstand, der bei der Synthese von Polyesterpolyolen auf Basis von ADS-DEG-Trimethylolpropan anfällt und sind demnach wirtschaftlich besonders günstig einzusetzen.

Zur Herstellung der Polyisocyanat-Polyadditionsprodukte setzt man die Inhibitoren bevorzugt in einer Menge von 0,01 bis 20,0 Gew.-%, bezogen auf das Gewicht der gegenüber Isocyanaten reaktiven Verbindungen, ein.

Des weiteren können bevorzugt allgemein bekannte α,β-ungesättigte Carbonsäuren, α,β-ungesättigte Carbonsäurederivate, α,β-ungesättigte Ketone und/oder α,β-ungesättigte Aldehyde als (vi) eingesetzt werden.

Aufgrund des Einsatzes von (vi) erreicht man, daß durch eine unerwünschte Spaltung von Urethan- und/oder Harnstoffbindungen gegebenenfalls entstandene freie Aminogruppen durch Reaktion mit den erfindungsgemäßen Verbindungen (vi) gebunden werden.

Sowohl primäre als auch sekundäre Amine sind zur Addition an C=C-Doppelbindungen befähigt, insbesondere wenn diese in Nachbarschaft zu einer Carbonylgruppe steht. Die nach Michael benannte Addition des Amins erfolgt dabei an das ungesättigte System, bei dem die π-Elektronen über die Carbonylgruppe hinweg delokalisiert sind. Wie in Experimenten festgestellt wurde, reichen Temperaturen von 70 bis 120°C, wie sie unter feucht-warmen Bedingungen, beispielsweise bei einer Heißdampfsterilisation oder Reinigung mit heißem Dampf vorkommen können, erstaunlicherweise aus, um im PUR-Schaumstoff durch hydrolytische Spaltung von Urethan- und Harnstoffbindungen gebildetes primäres Amin zumindest teilweise mit den Verbindungen (vi) umzusetzen. Die Aminogruppen werden durch Addition an die C=C-Doppelbindungen und unter Ausbildung einer kovalenten Bindung an die erfindungsgemäßen α,β-ungesättigten Carbonylverbindungen gebunden. Die Diffusion bzw. Migration von primären Aminen aus den Polyurethanschaumstoffen kann damit erfindungsgemäß vermindert werden. Dies gilt insbesondere, wenn die Verbindungen (vi) durch das Vorhandensein von einbaufähigen Gruppen wie OH oder NH₂ in das entstehende Polyurethannetzwerk eingebaut werden. Damit werden nicht nur die Verbindungen (vi) fixiert und damit deren Diffusion aus den Polyurethanschaumstoffen verhindert, sondern auch das an die Verbindung (vi) gebundene primäre Amin.

Bevorzugt sind Verbindungen (vi), die das folgende allgemeine Strukturmerkmal aufweisen: 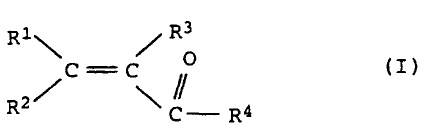 mit den folgenden Bedeutungen für die Reste R¹ bis R⁴:
- R¹:: H, (C₁-C₁₂ ) -Alkyl, (C₆-C₂₀)-Aryl,
- R²:: H, (C₁-C₁₂)-Alkyl, (C₆-C₂₀)-Aryl,
- R³:: H, (C₁-C₁₂)-Alkyl, (C₆-C₂₀)-Aryl,
- R⁴:: H, (C₁-C₁₂)-Alkyl, (C₆-C₂₀)-Aryl, -O-(C₁-C₁₂-)-Alykl, -O-(C₁-C₁₂-)-Alykl-OH, -(C₁-C₁₂-)-Alykl-OH, -O-(C₁-C₁₂-)-Alykl, -(C₁-C₁₂-)-Alykl-NH₂, -O-(C₁-C₁₂-)-Alykl-NH₂, -O-Benzyl, -O-Aryl. -O-(C₁-C₁₂-)-Alykl-COOH, -O-(C₁-C₁₂)Alkyl-CH(OH) -CH₂-O-(CO)-CHCH₂, -O-(C₁-C₁₂-)-Alykl-O-(CO)-CHCH₂.

Besonders bevorzugt als (vi) sind die folgenden Verbindungen: Acrylsäure, Crotonsäure, Isocrotonsäure, Sorbinsäure, Fumarsäure, Zimtsäure, Hydroxyethylacrylat, 3-(Acryloyloxy)-2-Hydroxypropylmethacrylat, Zimtsäurebenzylester, trans-3-Nonen-2-on, Benzalaceton, Dibenzalaceton, Benzalacetophenon, 1-Methylbenzalacetophenon, Crotonaldehyd, Zimtaldehyd, Methylvinylketon und/oder α,β-ungesättigte Polyesterdiole, hergestellt durch Polykondensation von Maleinsäure, Fumarsäure und/oder Acrylsäure mit oligomeren Diolen wie Butandiol, Diethylenglykol, Propylenglykol, 1,3-Propandiol und/oder Triolen wie Glycerin mit einem Molekulargewichtsfaktor pro Doppelbindung von 150 bis 3000, einer Fuktionalität von 2 bis 6, einer Hydroxylzahl von 20 bis 800 mg KOH/g und einer Säurezahl von 0 bis 15.

Insbesondere werden als (vi) die folgenden Verbindungen eingesetzt: Hydroxyethylacrylat, 3-(Acryloyl-oxy)-2-hydroxypropylmethacrylat Trans-3-Nonen-2-on, Zimtsäurebenzyl-ester, Crotonsäure und/oder α,β-ungesättigte Polyesterdiole (A), hergestellt durch Polykondensation von Maleinsäure, Fumarsäure oder Acrylsäure mit oligomeren Diolen wie Butandiol, Diethylenglykol, Propylenglykol, 1,3-Propandiol und/oder Triolen wie Glycerin mit einem Molekulargewichtsfaktor pro Doppelbindung von 150 bis 3000, einer Fuktionalität von 2 bis 6, einer Hydroxylzahl von 20 bis 800 mg KOH7g und einer Säurezahl von 0 bis 15.

α,β-ungesättigte Carbonylverbindungen mit zusätzlichen funktionellen Gruppen wie OH und NH₂, die ins PUR-Netzwerk eingebaut werden, führen zu einer besonders signifikanten Reduzierung der MDA- und TDA-Gehalte. Beispielhaft seien genannt Hydroxyethylacrylat oder 3-(Acryloyl-oxy)-2-hydroxypropylmethacrylat. In ähnlicher Weise wirken Polyole mit integrierten C=C-Doppelbindungen in Konjugation zur Carbonylgruppe.

Besonders bevorzugt sind im allgemeinen solche Verbindungen (vi), die sich gut in den Isocyanaten oder den gegenüber Isocyanaten reaktiven Verbindungen lösen. Bevorzugt wird (vi) in Mischung mit den Isocyanaten eingesetzt.

In dem erfindungsgemäßen Verfahren zur Herstellung der Polyurethanschaumstoffe setzt man (vi) bevorzugt in einer Menge von 0,1 bis 20 Gew.-%, besonders bevorzugt 0,5 bis 10 Gew.-%, bezogen auf das Gewicht der Polyisocyanat-Polyadditionsprodukte, ein.

Die erfindungsgemäß erhältlichen Polyurethanschaumstoffe weisen den besonderen Vorteil auf, daß gegebenenfalls durch Hydrolyse entstehende primäre Amine, insbesondere primäre aromatische Amine, durch die Verbindungen (vi) in eine unbedenkliche Form überführt werden. Die Polyurethanschaumstoffe, insbesondere Matratzen, Polsterungen von Möbeln oder Teppichhinterschäumungen, enthalten somit besonders bevorzugt Produkte der Umsetzung von primären und/oder sekundären Aminen, bevorzugt aromatischen Aminen, mit den dargestellten Verbindungen (vi), d.h. den α,β-ungesättigten Carbonsäuren, α,β-ungesättigten Carbonsäurederivaten, α,β-ungesättigten Ketonen und/oder α,β-ungesättigten Aldehyden.

Die bereits dargestellten Verbindungen, d.h. die hydrohoben Verbindungen sowie (i) organischen, cyclischen Verbindungen mit einem Molekulargewicht von 200 bis 3000 g/mol, (ii) Salze der Metalle der I, II und/oder VIII Nebengruppe, (iii) organische und/oder anorganische Säureanhydride, (iv) cyclischen Sulfonsäureester und/oder Sulfone, (v) Lactone, Lactame und/oder cyclische Ester und/oder (vi) α,β-ungesättigte Carbonsäuren, α,β-ungesättigte Carbonsäurederivate, α,β-ungesättigte Ketone und/oder α,β-ungesättigte Aldehyde können zur Herstellung von Polyisocyanat-Polyadditionsprodukten nach allgemein bekannten Verfahren beispielsweise durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln verwendet werden. Als Polyisocyanat-Polyadditionsprodukte können beispielsweise kompakte oder zellige, beispielsweise mikrozellige, weiche, halbharte oder harte Polyurethanschaumstoffe, thermoplastische Polyurethane, oder Polyurethanelastomere nach üblichen verfahren unter Verwendung der erfindungsgemäßen Inhibitoren hergestellt werden. Bevorzugt setzt man die dargestellten Verbindungen in Verfahren zur Herstellung von Polyurethanelastomeren oder geschäumten Polyisocyanat-Polyadditionsprodukten, insbesondere Polyurethanweichschaumstoffen mit einer Dichte von 15 bis 300 kg/m³, bevorzugt 2 bis 70 kg/m³, bevorzugt Matratzen und/oder Polsterungen für Möbel bzw. Teppiche, insbesondere Krankenhausmatratzen, durch Umsetzung von Isocyanaten mit gegenüber Isocyanaten reaktiven Verbindungen in Gegenwart von Katalysatoren, Treibmitteln und gegebenenfalls Zusatzstoffen und/oder Hilfsmitteln ein. Diese Produkte, d.h. insbesondere die Polsterungen für Möbel und/oder Teppiche bzw. die Matratzen werden zunehmend zur Reinigung bzw. Desinfektion mit heißem Dampf behandelt, womit gerade bei diesen Produkten die erfindungsgemäßen Vorteile besonders ausgeprägt sind.

Die allgemein üblichen Ausgangsstoffe für die Herstellung der Polyisocyanat-Polyadditionsprodukte werden nachfolgend beispielhaft beschrieben.

Als Isocyanate können die an sich bekannten aliphatischen, cycloaliphatischen, araliphatischen und vorzugsweise aromatischen organischen Isocyanate, bevorzugt mehrfunktionelle, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenylpolymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole.

Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4_{'}-Diphenyl-methan-diisocyanat, NDI, TODI, Roh-MDI, 2,4- und/oder 2,6-Toluylen-diisocyanat gegebenenfalls gemischt werden.

Bevorzugt werden als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat eingesetzt, wobei diese Isocyanate sowohl in beliebigen Mischungen als auch wie bereits beschrieben modifiziert eingesetzt werden können.

Als gegenüber Isocyanaten reaktive Verbindungen, gegebenenfalls zusätzlich zu den erfindungsgemäßen hydrophoben Verbindungen, soweit diese gegenüber Isocyanaten reaktiv sind, mit üblicherweise mindestens zwei reaktiven Wasserstoffatomen, üblicherweise Hydroxyl- und/oder Aminogruppen, können zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyetherpolyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500 g/mol.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen und/oder Polycarbonaten gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300, verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B.

Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen enthalten sein, besonders bevorzugt Triethylendiamin.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.

Bevorzugt werden mit den erfindungsgemäßen Mischungen geschäumte Polyisocyanat-Polyadditionsprodukte, beispielsweise geschäumte Polyurethane- und/oder Polyisocyanurate, hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponente zu vereinigen und als B-Komponente die Isocyanate und Katalysatoren und/oder Treibmittel einzusetzen. Die hydrophoben Verbindungen können, soweit sie keine gegenüber Isocyanaten reaktiven Gruppen aufweisen, in der A- und/oder B-Komponente beziehungsweise in den Bestandteilen dieser Komponenten verwendet werden. Hydrophobe Verbindungen, die gegenüber Isocyanaten reaktive Gruppen, beispielsweise Hydroxylgruppen aufweisen, werden bevorzugt in der Polyolkomponente eingesetzt.

Die Erfindung soll anhand der folgenden Beispiele dargestellt werden.

### Beispiele

Um Bedingungen, wie sie bei oben erwähnten Spezialanwendungen vorkommen können, zu simulieren, wurde mit Proben nachfolgend genannter weichschaumstoffe eine Feuchtwärmealterung durchgeführt. Hierzu wurden jeweils Probewürfel mit der Kantenlänge 3 cm bei 90°C und 90 % rel. Luftfeuchtigkeit für 72 Stunden im Klimaschrank gealtert. Unter diesen Bedingungen kann es zu einer hydrolytischen Spaltung von Urethan- und Harnstoffbindungen und damit zur Bildung aromatischer Amine kommen. Das gebildete Amin wurde anschließend mittels einer von Prof. Skarping, Universität Lund, entwickelten Methode extrahiert. Hierzu wird der Schaumstoff mit 10 ml Essigsäure (w = 1 Gew.-%) 10 mal ausgequetscht. Die Essigsäure wurde bei zusammengedrückter Schaumprobe in einen 50-ml-Meßkolben überführt. Der Vorgang wurde drei mal wiederholt und der Meßkolben wird bis zur Meßmarke mit Essigsäure aufgefüllt.

Anschließend wurde der MDA-Gehalt der vereinigten Extrakte mittels Kapillarelektrophorese mit UV-Detektion bestimmt. Die in den Tabellen angegebenen MDA- und TDA-Gehalte entsprechen den Absolutgehalten des gebildeten MDA und TDA im PUR-Schaum.
1) Polyurethan-Weichschaumstoff, nachfolgend bezeichnet als Vergleichssystem 1, hergestellt durch Vermischen von 750 g A-Komponente mit 354 g B-Komponente (Index 90) und Überführen des aufschäumenden Gemisches in eine auf 53°C temperierte Aluminiumform (40 x 40 x 10 cm), wobei sich die Komponenten folgendermaßen aufbauen:
A-Komponente

| | |
|---|---|
| 97 Gew.-Teile | eines Polyols mit der OHZ 28, einer mittleren Funktionalität von 2,3 und einem EO/PO Verhältnis von 14/86 |
| 3 Gew.-Teile | eines Polyols mit der OHZ 42, einer mittleren Funktionalität von 3 und einem PO/EO Verhältnis von 30/70 |
| 3,31 Gew.-Teile | Wasser |
| 0,8 Gew.-Teile | Aminopropylimidazol |
| 0,6 Gew.-Teile | Lupragen® N107, OHZ: 421 (BASF Aktiengesellschaft) |
| 0,5 Gew.-Teile | Tegostab® B 8631 (Goldschmidt) |

B-Komponente
Mischung aus einem Polymer-MDI mit einem Anteil von 50 % und einem Gemisch aus 2,4'-MDI und 4,4'-MDI im Verhältnis 1:1 mit einem Anteil von 50 %.
Dieses System beinhaltet als einbaubare Katalysatoren Aminopropylimidazol und 2-(2-dimethylaminoethoxy)-ethanol. Es wurde ausgewählt, um die besondere Wirksamkeit der zugesetzten Additive bei PUR-Rezepturen mit einbaufähigen Katalysatoren und katalytisch aktiven Spacerpolyolen zu verdeutlichen.
2) Polyurethan-Weichschaumstoff (Index 90) nachfolgend bezeichnet als Vergleichssystem 2, der als Modell für Standardweichschaumstoffe herangezogen wurde, hergestellt durch Vermischen von 750 g A-Komponente mit 354 g B-Komponente (Index 90) und Überführen des aufschäumenden Gemisches in eine auf 53°C temperierte Aluminiumform (40 x 40 x 10 cm), wobei sich die Komponenten folgendermaßen aufbauen:
A-Komponente

| | |
|---|---|
| 97 Gew.-Teile | eines Polyols mit der OHZ 28, einer mittleren Funktionalität von 2,3 und einem EO/PO Verhältnis von 14/86 |
| 3 Gew.-Teile | eines Polyols mit der OHZ 42, einer mittleren Funktionalität von 3 und einem PO/EO Verhältnis von 30/70 |
| 3,31 Gew.-Teile | Wasser |
| 0,22 Gew.-Teile | 1,4-Diazabicyclo[2.2.2]octan |
| 0,14 Gew.-Teile | Lupragen® N 206 (BASF Aktiengesellschaft) |
| 0,5 Gew.-Teile | Tegostab® B 8631 (Goldschmidt) |

B-Komponente
Mischung aus einem Polymer-MDI mit einem Anteil von 50 % und einem Gemisch aus 2,4'-MDI und 4,4'-MDI im Verhältnis 1:1 mit einem Anteil von 50 %.
3) Polyurethan-Weichschaumstoff (Index 90), nachfolgend bezeichnet als Vergleichssystem 3, aufgebaut aus:
A-Komponente

| | |
|---|---|
| 100 Gew.-Teile | eines Polyols mit der OHZ 35, einer mittleren Funktionalität von 3,0 und einem EO/PO Verhältnis von 13,3/86,4 |
| 3,31 Gew.-Teile | Wasser |
| 0,35 Gew.-Teile | Lupragen® N 201(BASF) |
| 0,38 Gew.-Teile | Zinndioktoat |
| 1,0 Gew.-Teile | Tegostab® B 8680 (Goldschmidt) |

B-Komponente:
Mischung aus einem Polymer-MDI mit einem Anteil von 50 % und einem Gemisch aus 2,4'-MDI und 4,4'-MDI im Verhältnis 1:1 mit einem Anteil von 50 %.
4) Polyurethan-Weichschaumstoff (Index 90), nachfolgend bezeichnet als Vergleichssystem 4, hergestellt durch Vermischen von 750 g A-Komponente mit 275 g B-Komponente (Index 115) und Überführen des aufschäumenden Gemisches in eine offene Form mit einem Volumen von 40 l, wobei sich die Komponenten folgendermaßen aufbauen:
A-Komponente

| | |
|---|---|
| 100 | Gew.-TeileLupranol® 2080 (BASF Aktiengesellschaft) |
| 4,50 | Gew.-TeileWasser |
| 0,30 | Gew.-TeileDabco® 33LV (Air Products) |
| 0,20 | Gew.-TeileZinndioktoat |
| 1,00 | Gew.-TeileSilikonstabilisator BF 2370 |

B-Komponente
Lupranat® T 80 (BASF Aktiengesellschaft)
5) Polyurethan-Weichschaumstoff (Index 90), nachfolgend bezeichnet als Vergleichssystem 5, aufgebaut aus:
A-Komponente

| | |
|---|---|
| 100 Teile | Lupranol® 2080 (BASF Aktiengesellschaft) |
| 3,80 Teile | Wasser |
| 0,15 Teile | Dabco® 33LV (Air Products) |
| 0,26 Teile | Zinndioktoat |
| 0,05 Teile | Niax® A1 (OSI) |
| 1,00 Teile | Silikonstabilisator BF 2370 |

B-Komponente
Lupranat® T 80 (BASF Aktiengesellschaft)
In Tabelle 1 werden die chemischen und physikalischen Eigenschaften der verwendeten hydrophoben Verbindungen miteinander verglichen.

**Tabelle 1:**

| Chemische und physikalische Eigenschaften der hydrophoben Verbindungen | | | | |
|---|---|---|---|---|
| Hydrophobe Verbindung | | OH-Zahl [mg KOH/g] | Viskosität [mPas] | Oxirangehalt [%] |
| 1 | (Kraton liquid Polymer L 2203) | 33 33 | 50000 50000 | 0,00 0,00 |
| 2 | (Merginat PV 235) | 250-300 | 1200-2000 | 2,59 |
| 3 | (Merginat PV 300) | 85 | 2990 | 1,77 |
| 4 | (Sovermol 1137/05) | 50-80 | 10000-14000 | 0,00 |
| 5 | | 61 | 955 | |
| 6 | | 80 | 565 | |

Erklärungen zu den hydrophoben Verbindungen:
- 1:: Hydroxyfunktionalisiertes Polyethylen/butylen, Shell
- 2:: verzweigtes oleochemisches Polyol, HOBUM
- 3:: Verzweigtes oleochemisches Polyol, HOBUM
- 4:: Leicht verzweigter fettchemischer Polyester, Henkel
- 5:: Polyesterpolyol auf Basis ADS/Pripol 1017 (Unichema)/DEG/TMP, wobei Pripol 1017 (BASF Aktiengesellschaft) einen dimeren Fettsäureester darstellt und zu ca. 10 % in 5 enthalten ist
- 6:: Polyetherpolyol auf Basis Ricinusöl/PO, BASF Aktiengesellschaft
- ADS:: Adipinsäure
- PO:: Propylenoxid
- DEG:: Diethylenglykol
- TMP:: Trimethylolpropan

**Tabelle 2:**

| Darstellung der Beispiele 1 bis 15 | | | |
|---|---|---|---|
| Beispiel | Vergleichssystem | Zusatz hydrophobe Verbindung | Menge hydrophobe Verbindung [Gew.-% in A-Komponente] |
| 1 | 1 | - | - |
| 2 | 1 | 2 | 1 |
| 3 | 1 | 2 | 2 |
| 4 | 1 | 2 | 5 |
| 5 | 1 | 2 | 11 |
| 6 | 1 | 4 | 11 |
| 7 | 1 | 3 | 11 |
| 8 | 2 | - | - |
| 9 | 2 | 2 | 11 |
| 10 | 3 | - | - |
| 11 | 3 | 1 | 10 |
| 12 | 4 | - | - |
| 13 | 4 | 5 | 30 |
| 14 | 5 | - | - |
| 15 | 5 | 6 | 100 |

Die Vergleichssysteme 1 bis 5 wurden mit und ohne Zusatz der in Tabelle 1 dargestellten hydrophoben Verbindungen hergestellt.

In den in Tabelle 2 dargestellten Beispielen wurde jeweils der in den unter 1) bis 5) dargestellte Anteil in Gew.-% des Grundpolyols der A-Komponente durch eine hydrophobe Verbindung mit mindestens zwei gegenüber Isocyanaten reaktiven Gruppen oder eine Mischung von hydrophoben Verbindungen mit mindestens zwei gegenüber Isocyanaten reaktiven Gruppen ersetzt.

In Tabelle 3 werden die MDA- oder TDA-Gehalte der Beispiele 1 bis 15 mit und ohne Zusatz von hydrophoben Verbindungen, die jeweils mindestens zwei gegenüber Isocyanaten reaktiven Gruppen aufwiesen, miteinander verglichen.

**Tabelle 3:**

| Vergleich der MDA-Gehalte von PUR-Weichschaumstoffen mit und ohne Zusatz von hydrophoben Verbindungen mit mindestens zwei gegenüber Isocyanaten reaktiven Gruppen | | | | | | | |
|---|---|---|---|---|---|---|---|
| Beispiel | Startzeit [s] | Gelzeit [s] | Steigzeit [s] | 4,4'-MDA [ppm] o.L. | 2,4'-MDA [ppm] o.L. | 4,4'-MDA [ppm] m.L. | 2,4'-MDA [ppm] m.L. |
| 1 | 13 | 80 | 100 | < 1 | < 1 | 397 | 687 |
| 2 | 20 | 75 | 110 | < 1 | < 1 | 139 | 275 |
| 3 | 20 | 80 | 115 | < 1 | < 1 | 109 | 225 |
| 4 | 20 | 80 | 115 | < 1 | < 1 | 90 | 94 |
| 5 | 12 | 75 | 105 | < 1 | < 1 | 56 | 141 |
| 6 | 15 | 90 | 105 | < 1 | < 1 | 87 | 200 |
| 7 | 15 | 85 | 135 | < 1 | < 1 | 96 | 207 |
| 8 | 13 | 45 | 80 | < 1 | < 1 | 32 | 78 |
| 9 | 13 | 55 | 95 | < 1 | < 1 | 24 | 66 |
| 10 | 15 | 95 | 130 | < 1 | < 1 | 53 | 153 |
| 11 | 25 | 150 | 180 | < 1 | < 1 | 11 | 27 |
| 12 | - | - | - | < 1 | < 1 | 69 | 35 |
| 13 | - | - | - | < 1 | < 1 | 24 | 15 |
| 14 | - | - | - | < 1 | < 1 | 69 | 35 |
| 15 | - | - | - | < 1 | < 1 | 17 | 9 |

| | | | | | | | |
|---|---|---|---|---|---|---|---|
| o.L.:Extraktion nach Verarbeitung des Schaumstoffes | | | | | | | |
| m.L.: Extraktion nach Feucht-Wärme-Alterung von 3 Tagen bei 90°C und 90 % rel. Luftfeuchtigkeit im Klimaschrank | | | | | | | |

In Tabelle 4 sind Beispiele angegeben, in denen den Polyurethanschaumstoffrezepturen neben den hydrophoben Verbindungen weitere Verbindungen aus der Gruppe (i), (ii), (iii), (iv), (v) oder (vi) zugesetzt wurden, die dazu befähigt sind, den Gehalt an primären Aminen weiter zu reduzieren. In Tab. 5 sind die entsprechenden Ergebnisse dargestellt.

**Tabelle 4:**

| Schaumstoffe, hergestellt durch Zusatz von 2 Teilen der hydrophoben Verbindung 2 und einer weiteren Verbindung der Gruppe (i), (ii), (iii), (iv), (v) oder (vi) zur Reduzierung des Gehaltes an primären Aminen | | | |
|---|---|---|---|
| Beispiel | Vergleichssystem | Zusatz Additiv | Menge Additiv [Gew.-% gelöst in A-Komponente] |
| 16 | 1 | Lupragen VP 9198 | 10 |
| 17 | 1 | 1-Naphthol-8-Sulfonsäuresulton | 2 |

Lupragen® VP 9198 (BASF Aktiengesellschaft): α,β-ungesättigtes Polyesterdiol mit einer OH-Zahl von 336 mg KOH/g, einer Säurezahl von 0,7 und einem Molekulargewichtsfaktor pro Doppelbindung von 262, hergestellt durch Polykondensation von Maleinsäureanhydrid, 1,3-Propandiol und Diethylenglykol im Molverhältnis 1:1:1.

**Tabelle 5:**

| Ergebnisse der Beispiele 16 und 17 | | | | | | | |
|---|---|---|---|---|---|---|---|
| Beispiel | Startzeit [s] | Gelzeit [s] | Steigzeit [s] | 4,4'-MDA [ppm] o.L. | 2,4'-MDA [ppm] o.L. | 4,4'-MDA [ppm] m.L. | 2,4'-MDA [ppm] m.L. |
| 16 | 21 | 117 | 150 | < 1 | < 1 | 33 | 82 |
| 17 | 14 | 83 | - | < 1 | < 1 | 33 | 89 |

| | | | | | | | |
|---|---|---|---|---|---|---|---|
| o.L.:Extraktion nach Verarbeitung des Schaumstoffes | | | | | | | |
| m.L.:Extraktion nach Feucht-Wärme-Alterung von 3 Tagen bei 90°C und 90 % rel. Luftfeuchtigkeit im Klimaschrank | | | | | | | |

Die Nachweisgrenze der kapillarelektrophoretischen Bestimmung beträgt 1 ppm.

Wie die MDA- und TDA-Gehalte in den Beispielen 1 bis 12 zeigen, konnten die erfindungsgemäßen Vorteile, d.h. der deutlich gesenkte Gehalt an primären aromatischen Aminen nach einer Lagerung unter feucht-warmen Bedingungen durch den Zusatz von hydrophoben Verbindungen überzeugend nachgewiesen werden, wobei der verminderte Gehalt an aromatischen Aminen darauf beruht, daß deren Bildung verhindert wird, indem durch den Zusatz der hydrophoben Verbindungen der Zutritt von Feuchtigkeit in das Schaumstoffinnere vermindert wird und somit einer hydrolytischen Spaltung von Urethan- und Harnstoffbindungen entgegengewirkt wird.

## Patentansprüche

1. Polyurethanweichschaumstoffe mit einer Dichte von 2 bis 70 kg/m³ enthaltend hydrophobe Verbindungen sowie mindestens eine weitere Verbindung ausgewählt aus Gruppe: (i) organische, cyclische Verbindungen mit einem Molekulargewicht von 200 bis 3000 g/mol, (ii) Salze der Metalle der I, II und/oder VIII Nebengruppe, (iii) organische und/oder anorganische Säureanhydride, (iv) cyclische Sulfonsäureester und/oder Sulfone, (v) Lactone, Lactame und/oder cyclische Ester und/oder (vi) α,β-ungesättigte Carbonsäuren, α,β-ungesättigte Carbonsäurederivate, α,β-ungesättigte Ketone und/oder α,β-ungesättigte Aldehyde.

2. Polyisocyanat-Polyadditionsprodukte gemäß Anspruch 1 enthaltend als hydrophobe Verbindungen gegebenenfalls modifizierte Fettsäureester, Öle und/oder Polyolefine.

3. Verfahren zur Herstellung von Polyurethanweichschaumstoffen mit einer Dichte von 2 bis 70 kg/m³, **dadurch gekennzeichnet, daß** man die Herstellung in Gegenwart von hydrophoben Verbindungen sowie mindestens einer weiteren Verbindung durchführt ausgewählt aus der Gruppe: (i) organische, cyclische Verbindungen mit einem Molekulargewicht von 200 bis 3000 g/mol, (ii) Salze der Metalle der I, II und/oder VIII Nebengruppe, (iii) organische und/oder anorganische Säureanhydride, (iv) cyclische Sulfonsäureester und/oder Sulfone, (v) Lactone, Lactame und/oder cyclische Ester und/oder (vi) α,β-ungesättigte Carbonsäuren, α,β-ungesättigte Carbonsäurederivate, α,β-ungesättigte Ketone und/oder α,β-ungesättigte Aldehyde.

4. Matratzen oder Polsterungen für Möbel und/oder Teppiche enthaltend Polyurethanweichschaumstoffe gemäß Anspruch 1.

5. Verwendung von hydrophoben Verbindungen zur Reduzierung der Bildung von primären Aminen in Polyisocyanat-Polyadditionsprodukten.

6. Verwendung von hydrophoben Verbindungen zur Reduzierung des Gehaltes an primären Aminen in Polyisocyanat-Polyadditionsprodukten.

7. Verwendung von hydrophoben Verbindungen zur Verringerung der Wasseraufnahme in Polyisocyanat-Polyadditionsprodukte, insbesondere Polyurethanweichschaumstoffe.

## Claims

1. A flexible polyurethane foam having a density of from 2 to 70 kg/m³ and comprising hydrophobic compounds plus at least one further compound selected from the group consisting of: (i) organic, cyclic compounds having a molecular weight of from 200 to 3000 g/mol, (ii) salts of metals of transition groups I, II and/or VIII, (iii) organic and/or inorganic acid anhydrides, (iv) cyclic sulfonic esters and/or sulfones, (v) lactones, lactams and/or cyclic esters and/or (vi) α,β-unsaturated carboxylic acids, α,β-unsaturated carboxylic acid derivatives, α,β-unsaturated ketones and/or α,β-unsaturated aldehydes.

2. A polyisocyanate polyaddition product as claimed in claim 1 comprising, as hydrophobic compounds, modified or unmodified fatty acid esters, oils and/or polyolefins.

3. A process for producing flexible polyurethane foams having a density of from 2 to 70 kg/m³ carried out in the presence of hydrophobic compounds plus at least one further compound selected from the group consisting of: (i) organic, cyclic compounds having a molecular weight of from 200 to 3000 g/mol, (ii) salts of metals of transition groups I, II and/or VIII, (iii) organic and/or inorganic acid anhydrides, (iv) cyclic sulfonic esters and/or sulfones, (v) lactones, lactams and/or cyclic esters and/or (vi) α,β-unsaturated carboxylic acids, α,β-unsaturated carboxylic acid derivatives, α,β-unsaturated ketones and/or α,β-unsaturated aldehydes.

4. A mattress or furniture upholstery and/or carpet backing comprising a flexible polyurethane foam as claimed in claim 1.

5. The use of hydrophobic compounds for reducing the formation of primary amines in polyisocyanate polyaddition products.

6. The use of hydrophobic compounds for reducing the primary amine content of polyisocyanate polyaddition products.

7. The use of hydrophobic compounds for reducing the water uptake of polyisocyanate polyaddition products, in particular flexible polyurethane foams.

## Revendications

1. Mousses souples de polyuréthane possédant une densité de 2 à 70 kg/m³ contenant des composés hydrophobes et au moins un composé supplémentaire choisi parmi le groupe comprenant: (i) des composés cycliques organiques possédant un poids moléculaire de 200 à 3000 g/mole, (ii) des sels des métaux des sous-groupes I, II et/ou VIII, (iii) des anhydrides d'acides organiques et/ou inorganiques, (iv) des esters d'acides sulfoniques cycliques et/ou des sulfones, (v) des lactones, des lactames et/ou des esters cycliques et/ou (vi) des acides carboxyliques à insaturation α,β, des dérivés d'acides carboxyliques à insaturation α,β, des cétones à insaturation α,β et/ou des aldéhydes à insaturation α,β.

2. Produits de polyaddition de polyisocyanates selon la revendication 1, contenant, à titre de composés hydrophobes, des esters d'acides gras, des huiles et/ou des polyoléfines le cas échéant modifiés.

3. Procédé pour la préparation de mousses souples de polyuréthane possédant une densité de 2 à 70 kg/m³, **caractérisé en ce qu'**on effectue la préparation en présence de composés hydrophobes et d'au moins un composé supplémentaire choisi parmi le groupe comprenant : (i) des composés cycliques organiques possédant un poids moléculaire de 200 à 3000 g/mole, (ii) des sels des métaux des sous-groupes I, II et/ou VIII, (iii) des anhydrides d'acides organiques et/ou inorganiques, (iv) des esters d'acides sulfoniques cycliques et/ou des sulfones, (v) des lactones, des lactames et/ou des esters cycliques et/ou (vi) des acides carboxyliques à insaturation α,β, des dérivés d'acides carboxyliques à insaturation α,β, des cétones à insaturation α,β et/ou des aldéhydes à insaturation α,β.

4. Matelas ou capitonnages pour des meubles et/ou pour des tapis contenant des mousses souples de polyuréthane selon la revendication 1.

5. Utilisation de composés hydrophobes pour la réduction de la formation d'amines primaires dans des produits de polyaddition de polyisocyanates.

6. Utilisation de composés hydrophobes pour la réduction de la teneur en amines primaires dans des produits de polyaddition de polyisocyanates.

7. Utilisation de composés hydrophobes pour la réduction de l'absorption d'eau dans des produits de polyaddition de polyisocyanates, en particulier dans des mousses souples de polyuréthane.
